(19) Europäisches Patentamt
European Patent Office
Office européen des brevets

(11) Publication number: 0 318 251 A2

# (12) EUROPEAN PATENT APPLICATION

(21) Application number: 88311050.4

(51) Int. Cl.4: H01F 1/08 , H01F 41/02

(22) Date of filing: 23.11.88

(30) Priority: 27.11.87 GB 8727852

(43) Date of publication of application: 31.05.89 Bulletin 89/22

(84) Designated Contracting States: AT CH DE FR GB IT LI NL

(71) Applicant: IMPERIAL CHEMICAL INDUSTRIES PLC
Imperial Chemical House Millbank
London SW1P 3JF(GB)

Applicant: SEIKO EPSON CORPORATION
4-1, Nishishinjuku 2-chome
Shinjuku-ku Tokyo-to(JP)

(72) Inventor: Raistrick, James Hugh
71 Ashbourne Avenue
Runcorn Cheshire(GB)

(74) Representative: Walmsley, David Arthur Gregson et al
Imperial Chemical Industries PLC Legal department: Patents PO Box 6 Bessemer Road
Welwyn Garden City Hertfordshire AL7 1HD(GB)

## (54) Compositions for the production of magnets and magnets produced therefrom.

(57) A composition from which a bonded magnet may be produced and which comprises a mixture of a crosslinkable organic material and a particulate magnetic material, and optionally and additive which is capable of effecting cross-linking of the organic material to produce a cross linked resin, in which the composition comprises at least 50% by volume of particulate magnetic material, the composition being extrudable through a capillary rheometer, and the composition having a viscosity of not more thn 6000 poise at a shear rate of 1100 sec$^{-1}$ when the organic material is in a liquid state and the composition is extruded through the capillary rheometer. Also a bonded magnet produced from the composition.

Fig.1

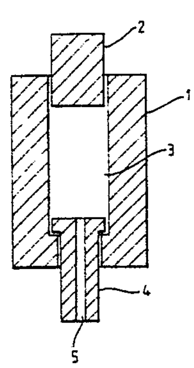


EP 0 318 251 A2

# COMPOSITION FOR THE PRODUCTION OF MAGNETS AND MAGNETS PRODUCED THEREFROM

This invention relates to a composition from which a magnet may be produced, in particular to a composition which comprises a cross-linkable organic material and a particulate magnetic material, and to a magnet produced from the composition. The invention thus relates to a composition from which so-called bonded magnets may be produced, and to bonded magnets produced from the composition.

Bonded magnets which are produced from a composition comprising an organic material e.g. an organic polymeric material, and a particulate magnetic material, are well-known. Most commonly such magnets are produced commercially from a composition comprising a mixture of a thermoplastic organic polymeric material and a particulate magnetic material. For example, a composition comprising a mixture of a thermoplastic organic polymeric material and particulate magnetic material may be shaped in plastics processing equipment, e.g. in an injection moulder or in an extruder, or the composition may be processed by compression moulding.

The composition is shaped whilst the thermoplastic organic polymeric material is in a fluid state and the composition is then cooled to a solid state. Optionally, whilst the organic polymeric material is in a fluid state, the composition may be subjected to the influence of a magnetic field in order to align the particles of magnetic material to the direction of easy magnetisation and thus enhance the performance of the magnet. The magnetic field is maintained whilst the organic polymeric material is cooled to a solid state, and thereafter the thus shaped composition is removed from the influence of the magnetic field as, when the organic polymeric material is in a solid state, the magnetic field is no longer needed in order to maintain the alignment of the particles of magnetic material. The thus produced shaped article is then removed from the plastics processing equipment.

The organic polymeric material in the composition used in the production of the bonded magnet may be a polyolefin, for example, polyethylene or polypropylene, but a particularly favoured material for use in such a composition is a polyamide, that is one of the nylons. A particularly favoured nylon is nylon-6. For example, Japanese Patent Publication No. 59 094406 describes a composition of a synthetic resin and a powdered magnetic material whose surface has been treated with a coupling agent. The magnetic material may be a ferrite or a rare-earth/cobalt intermetallic compound, and the synthetic resin may be polypropylene, polyvinyl chloride or a polyamide, e.g. nylon -6, nylon -11 or nylon -12. The use of polyamides, e.g. nylon -6 and nylon -6.6, in such compositions is also described in Japanese Patent Publication No. 60 216524 and in Japanese Patent Publication No. 61 059705.

Magnets produced from compositions in which the organic polymeric material is a thermoplastic such as a nylon or a polyolefin do, however, suffer from disadvantages, as do the processes used in production of the magnets. Thus, the glass transition temperatures of polyolefins and of the nylons may be relatively low such that at relatively low temperatures magnets made from compositions comprising polyolefins and the nylons may tend to distort and become misshapen, particularly under the influence of a strong magnetic field or as a result of repulsion between the aligned particles of magnetic material, with possible serious consequences for the equipment in which the magnet is installed. For example, the glass transition temperatures of nylon -6, nylon -11 and nylon -12 are respectively 62.5° C, 46° C and 37° C. Thus, the effective upper limit of operation of such a magnet may be at a relatively low temperature, and in particular it may be at a temperature which is not as high as might be desired. Furthermore, it is necessary to process the composition at a temperature at which the organic polymeric material is in a fluid state, and the latter material may melt at a temperature which is so high that during the processing there is an adverse effect on the properties of the particles of magnetic material, e.g. as a result of oxidation. Also, in order to produce a bonded magnet having a high magnetic performance it is necessary to use a composition containing a high proportion of particles of magnetic material. Such a composition may have a high viscosity when it is subjected to plastics processing, and it may be difficult if not impossible to shape a composition containing the desired high proportion of particulate magnetic material. Excessively high temperatures may also be needed in order that the organic polymeric material shall be in a sufficiently fluid state that the composition can be shaped, with possible adverse effect on the properties of the particles of magnetic material.

Magnets made from compositions which comprise an organic material and which have a reduced tendency to distort at high temperatures and which thus may be operated at higher temperatures may be made from compositions in which the organic material is a cross-linkable or curable organic material, e.g. a thermosetting resin. In the production of magnets from such a composition a composition comprising a cross-linkable organic material, optionally an additive capable of effecting or assisting cross-linking of the

material, and a particulate magnetic material, is shaped on plastics processing equipment at a temperature at which the organic material is in a fluid state, the organic material is cross-linked and the bonded magnet comprising particulate magnetic material and a solid cross-linked organic material is recovered. When the organic material is in a fluid state the composition may be subjected to a magnetic field in order to align the particles of magnetic material to the direction of easy magnetisation and thus enhance the performance of the magnet. In this case the influence of the magnetic field is maintained until sufficient cross-linking has been effected that the composition has solidified at least to the extent that the aligned particles are able to retain their alignment when the magnetic field is removed, if necessary the cross-linking reaction is completed, and the bonded magnet is recovered. If the influence of the magnetic field was not maintained whilst the organic material in the composition was still in a fluid state the particles of magnetic material would become misaligned due to repulsion between adjacent particles in the fluid composition, and the magnetic performance of the resultant bonded magnet would be reduced.

Examples of the production of bonded magnets from compositions comprising a cross-linkable organic material are provided by Japanese Patent Publication No. 60 220905 which describes the production of a bonded magnet from a composition which comprises an epoxy resin, a rare-earth magnetic powder, and an aliphatic carboxylic ester as a lubricant, by Japanese Patent Publication No 60 220906 which describes the production of a bonded magnet from a composition which comprises an epoxy resin, a rare earth magnetic powder, and an aliphatic carboxylic acid amide as a lubricant, by Japanese Patent Publication No. 60 206111 which describes, in a specific example the production of a bonded magnet from a composition which comprises a bisphenol A novolak epoxy resin, optionally a liquid diluent, and a magnetic powder of an intermetallic compound of samarium and cobalt, and by Japanese Patent Publication No. 60 183705 which describes the production of a bonded magnet from a composition of a ferrite powder, which has been treated with a surfactant, and a unsaturated liquid polyester resin.

The cross-linked material in the bonded magnet will generally have a high glass transition temperature and a bonded magnet produced from such a composition has the advantageous property that it may generally be safely operated at a substantially higher temperature than that at which a bonded magnet produced from a composition comprising a thermoplastic organic polymeric material may be operated.

The production of bonded magnets from such compositions comprising a cross-linkable organic material and a particulate magnetic material does, however, suffer from disadvantages. Thus, it is particularly desirable that composition should contain a high proportion of particulate magnetic material in order that the bonded magnet produced from the composition should have a high magnetic performance. However, we have found that it may not be possible to shape in a satisfactory manner a composition containing the desired high proportion of magnetic material. Furthermore, even where a composition which contains a high proportion of particulate magnetic material can be shaped in a satisfactory manner it may not be possible to effect the required degree of alignment of the particles of magnetic material when the composition is subjected to the influence of a magnetic field, and thus it may not be possible to produce a bonded magnet having the desired high level of magnetic performance.

We have found, however, that where a bonded magnet is produced from a composition which comprises a cross-linkable organic material and a high proportion of particulate magnetic material it is possible, by suitable choice of the organic material in the composition, not only to shape the composition in a satisfactory manner but also to align the particles of magnetic material so that the bonded magnet produced from the composition possesses a particularly high magnetic performance.

According to the present invention there is provided a composition from which a bonded magnet may be produced and which comprises a mixture of a cross-linkable organic material and a particulate magnetic material, and optionally an additive which is capable of effecting or assisting cross-linking of the organic material to produce a cross-linked material, the composition comprising at least 50% by volume of particulate magnetic material, the components of the composition being chosen such that the composition is extrudable through a capillary rheometer, and the composition having a viscosity of not more than 6000 poise at a shear rate of 1100 $sec^{-1}$ when the organic material is in a liquid state and the composition is extruded through said capillary rheometer.

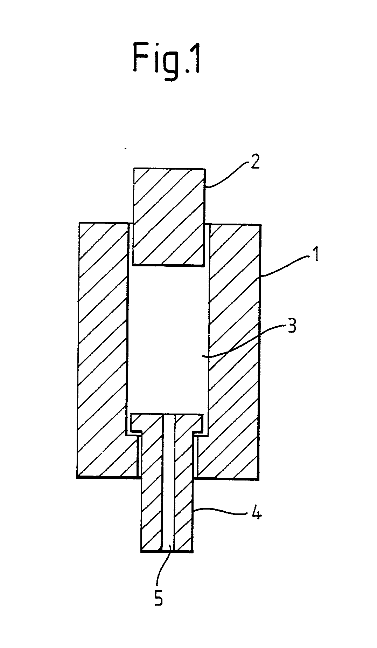

The capillary rheometer, which is illustrated in the accompanying Figure 1, comprises a cylindrical barrel 1 and a piston 2 positioned in the cylinder 3 of the barrel. The lower end of the barrel carries a die 4 having a capillary 5. The composition of the invention must be capable of being extruded through the capillary of the die of the capillary rheometer at a shear rate of 1100 $sec^{-1}$.

The shear stress in kN $cm^{-2}$ is defined by

$$\frac{F\ d}{\Pi\ L\ D^2}$$

and the shear rate in second-1 by

$$\frac{2\ v\ D^2}{15\ d^3}$$

where D is the diameter of the barrel of the rheometer in cm, v is the rate of travel of the piston in the barrel of the rheometer in cm $min^{-1}$, d is the diameter of the capillary of the rheometer in cm, L is the length of the capillary of the rheometer in cm, and F is the force in kN applied to the piston of the rheometer. In general, D will be in the range 1 to 3 cm, d in the range 0.05 to 0.5 cm, and L in the range 5d to 20d.

The viscosity of the composition in poise is

$$\frac{\text{shear stress}}{\text{shear rate}} \times 10^4$$

The values of V, D and d should be chosen in order to achieve the desired shear rate of 1100 $sec^{-1}$.

The composition of the invention must be capable of being extruded through the capillary rheometer and, where the organic material in the composition is itself a solid material at ambient temperature, the extrusion must clearly be effected at a temperature above the melting point of the organic material and at which the organic material is liquid.

The viscosity of the composition will depend on the temperature of the composition and the temperature may be varied in order to achieve a viscosity below the defined upper limit.

We have found that many compositions which comprise a cross-linkable organic material and at least 50% by volume of particulate magnetic material are not even capable of being extruded in the capillary rheometer at a shear rate of 1100 $sec^{-1}$ no matter what temperature is chosen. Such compositions are difficult if not impossible to shape satisfactorily into a bonded magnet containing a high volume fraction of particulate magnetic material. Other compositions which are capable of being extruded in the capillary rheometer at a shear rate of 1100 $sec^{-1}$ are of high viscosity, and in particular they may have viscosities substantially in excess of 6000 poise. Although it is not always the case, such high viscosity compositions may possibly be shaped satisfactorily into a bonded magnet. However, the degree of alignment of the particles of magnetic material which may be effected under the influence of a magnetic field may not be as great as may be desired, because of the relatively high viscosity of the composition, with the result that magnetic performance of the resultant bonded magnet may not be as great as may be desired. On the other hand, the composition of the invention has a relatively low viscosity when the organic material is in a liquid state with the result that it is possible to achieve a high degree of alignment of the particles of magnetic material under the influence of a magnetic field and to shape the composition to produce a bonded magnet containing a high volume fraction of particulate magnetic material and having a high magnetic performance.

In a further embodiment of the invention there is provided a bonded magnet which comprises a cross-linked organic material and a particulate magnetic material which has been produced from the aforementioned composition.

The composition of the invention is also particularly suitable for use in the production of bonded magnets which are of thin cross-section and, although the process by which the composition is shaped is not limited to extrusion, the composition is also particularly suitable for use in the production by extrusion of bonded magnets of substantial length. Such bonded magnets may be in a rod-like form, eg a rod of circular cross-section, or they may be in a tubular form, particularly in the form of a thin walled tube.

The viscosity of the composition, at a temperature at which the organic material is liquid, is governed inter alia by the nature of the organic material, by the nature of the particulate magnetic material and by the proportion thereof in the composition, and by the temperature of the composition.

For example, where the organic material is a relatively high molecular weight polymeric material the composition will generally be of higher viscosity than is the case where the organic material is a relatively

low molecular weight non-polymeric material, and for this reason it is preferred that the composition of the invention comprises an organic material of the latter type.

The viscosity of the composition is also governed by the nature of the particulate magnetic material, and in particular by the shape of the particles of magnetic material. Thus, the viscosity of the composition will tend to be higher where the particles of magnetic material have a high aspect ratio, that is where the particles are acicular in shape, whereas the viscosity of the composition will tend to be lower where the aspect ratio of the particles of magnetic material is low, that is where the particles tend towards a more spherical shape.

The proportion of particulate magnetic material in the composition also has an effect on the viscosity of the composition and on the magnetic performance of the bonded manget produced from the composition. As the proportion of particulate magnetic material in the composition increases the viscosity of the composition tends to increase. However, as the magnetic performace of the bonded magnet produced from the composition increases with increase in the proportion of particulate magnetic material in the composition it is preferred that the composition comprises at least 60%, more preferably at least 70%, by volume of the particulate magnetic material, provided of course that the composition satisfies the viscosity criterion of the invention. The bonded magnet may have a magnetic energy product (BH) max of greater than 7 MG Oe.

The viscosity of the composition is also dependent on the temperature of the composition, the viscosity in general decreasing with increase in the temperature of the composition. As the use of excessive temperature may have an adverse effect on the organic material and/or on the particulate magnetic material, for example so as to cause degradation of the organic material and/or oxidation of the particulate magnetic material, and may lead to premature cross-linking of the organic material, it is preferred to use an organic material which provides the required viscosity in the composition at a temperature which is not more than 50 °C above the melting point of the organic material in the composition.

In order that the composition of the invention should be particularly readily processable, and in order that the particles of magnetic material should be capable of being readily aligned to the direction of easy magnetisation under the influence of an applied magnetic field, it is preferred that the viscosity of the composition be not more than 3000 poise at a shear rate of 1100 $sec^{-1}$ when the organic material is in a liquid state at the chosen temperature, more preferably not more than 1000 poise.

The composition of the invention is particularly readily shaped and permits substantial flexibility in the design of magnets to be achieved, and magnets of simple shape or of complex shape may be produced from the composition. Magnets made from the composition of the invention are light in weight and may, for example, have a weight which is only about two thirds of the weight of a metallic magnet of corresponding size. The magnets produced by the process are also less brittle than are ceramic magnets.

The magnets may be used in many applications, for example in motors, TV sets, in printers and in latching devices, e.g. latching devices on doors.

In the composition of the invention the organic material will generally be a solid material which is melt processable. In general the organic material will be solid at or about ambient temperature of 25 °C, and be melt-processable at a higher temperature. It is preferred that the organic material, and the composition of the invention, are melt-processable on plastics processing equipment, for example, in an injection moulder, or in an extruder, or in a compression mould. The composition of the invention optionally also contains an additive which is capable of effecting or assisting cross-linking of the organic material, although the presence of such an additive is not essential provided that the organic material may be cross-linked in the absence of such an additive.

The organic material and the particulate magnetic material, and optionally the additive, and the proportions thereof, are selected such that the composition has the desired viscosity, and the combination of organic material and particulate magnetic material, and optionally the additive, and the proportions, thereof may be selected by means of simple test. Thus, a homogeneous mixture of the components of the composition in the desired proportions should be formed, e.g. by compounding in a bladed mixer and/or on a twin-roll mill, and the homogeneous composition should be extruded in a capillary rheometer as described at a temperature at which the organic material is liquid and the viscosity should be determined. For a given composition the components of the composition and the proportions thereof should be chosen such that at the temperature which is chosen the viscosity of the composition is below the required maximum of 6000 poise at a shear rate of 1100 $sec^{-1}$.

The organic material in the composition may be an organic monomeric material which is preferably solid, or it may be an organic polymeric material which is preferably solid. The composition may comprise a mixture of two or more organic monomeric materials, or a mixture of two or more organic polymeric materials, or a mixture of one or more organic monomeric materials and one or more organic polymeric materials.

Examples of organic monomeric materials include 1:3 dialkyl urea.
$H_2C = CH - CH_2 - NH - CO - NH - CH_2 - CH = CH_2$,

**9 vinyl carbazole** 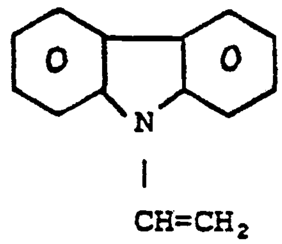

**penta erythritol tetramethacrylate,**

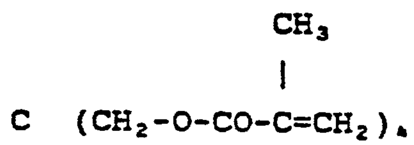

**3,9- divinyl -2,4,8,10 tetraoxa spiro (5,5) undecane,** 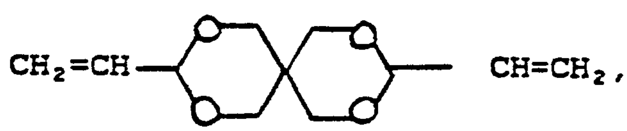

**an adduct of 4,4' diphenyl methane diisocyanate and hydroxy ethyl methacrylate,**

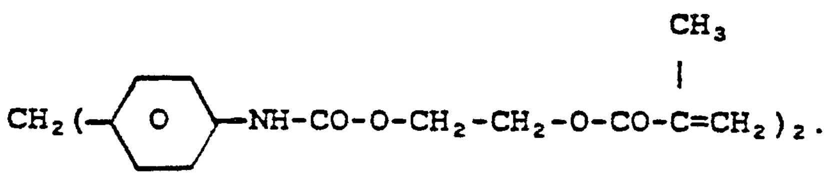

Examples of organic polymeric materials which are solid but which are melt processable include ethylenically unsaturated polyester resins and epoxy resins.

Examples of epoxy resins include bisphenol A:-

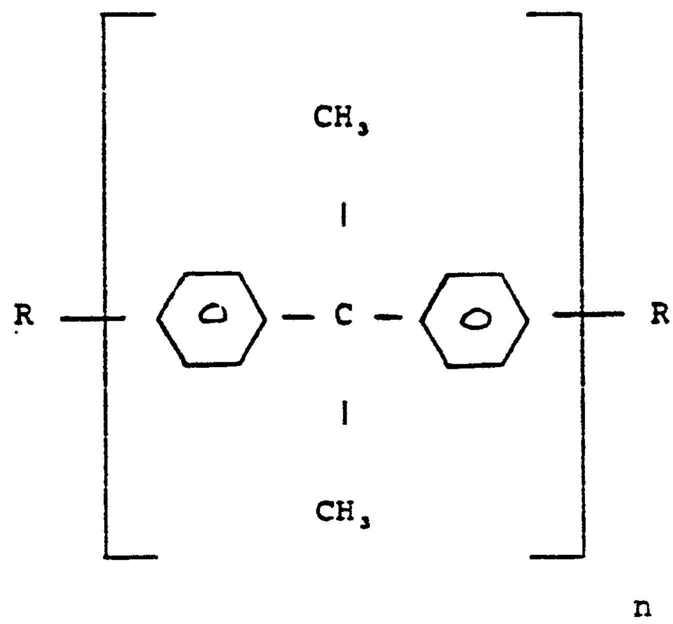

and epoxidised phenol-formaldehyde novolak:-

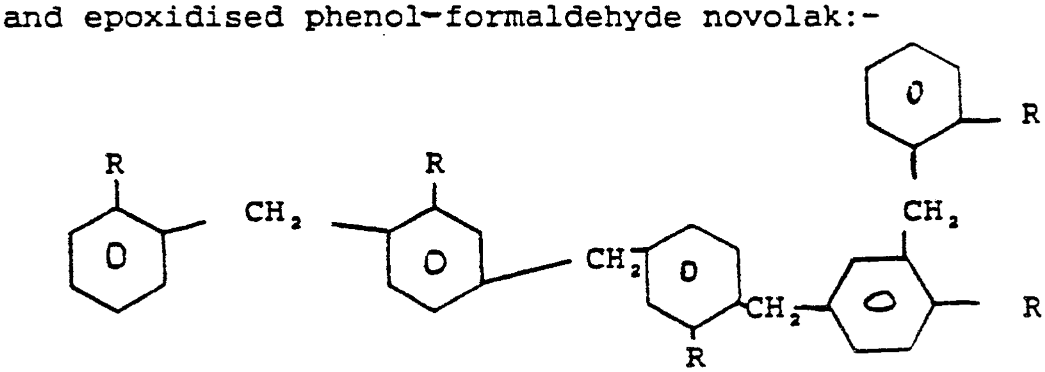

in which

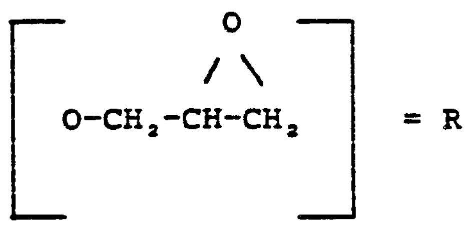

The epoxy resin may contain a suitable hardener which comprises a plurality of hydroxyl groups. An example of such a hardener is phenol-formaldehyde novolak:-

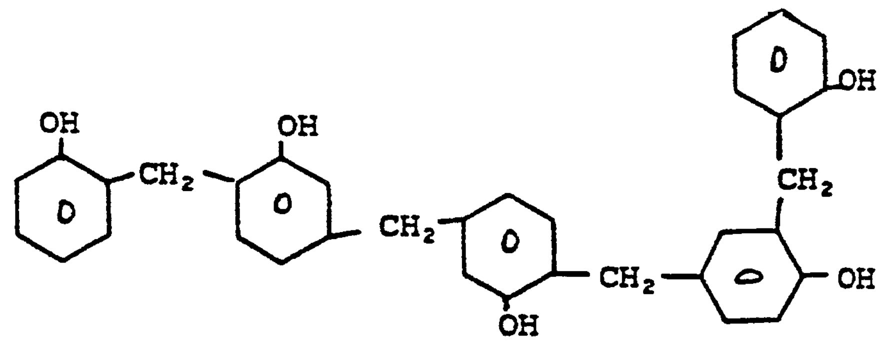

Examples of organic materials which may be formed into compositions of the invention which satisfy the viscosity requirements, at least at relatively low proportions of particulate magnetic material, include an epoxy resin which is an epoxidised oligomerised bisphenol A and a phenol formaldehyde novolak as hardener, and a mixture of tetrahydrofurfunyl methacrylate and a reaction product of hydroxy ethyl methacrylate and an isocyanate oligomer.

Examples of organic materials which in general are not capable of being formed into compositions which satisfy the viscosity requirements, at least at relatively high proportions of magnetic material. and possibly even in compositions containing the minimum proportion by volume of particulate magnetic material of 50% by volume, include

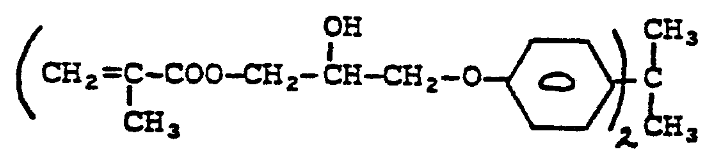 , and

a mixture of

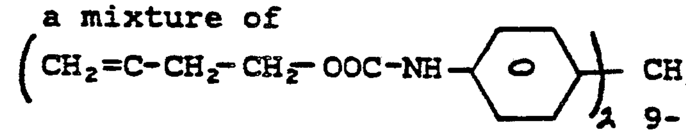 and

9- vinyl carbazole.

The proportion of organic material in the composition will in general be at least 10% by volume of the composition but not more than 50% by volume of the composition. A suitable proportion is 20 to 40% by volume.

The composition may contain, and preferably does contain, an additive which is capable of effecting or assisting cross-linking of the organic material in the composition, although cross-linking may be effected in the absence of such an additive. Suitable such cross-linking additives include free-radical generators e.g. peroxides and azo compounds, for example, azo-bis-iso butyronitrile, especially where the organic material contains ethylenically unsaturated groups, for example, where the organic material is a polyester resin or where it is an acrylic material. Where the organic material is an epoxy resin it may contain an additive which catalyses reaction between the epoxy resin and hardener.

The amount of additive which is capable of assisting or effecting cross-linking will depend to some extent at least on the nature of the additive and on the nature of the organic material but an amount of additive in the range of 0.01% to 2% by volume of the composition will generally suffice. Where the organic material contains ethylenically unsaturated groups, as in a polyester resin or in an acrylic material, and the additive is a free-radical generator, an amount of additive in the range 0.01% to 2% by volume of the composition will generally suffice, indeed, only a trace of such an additive may be required. Where the organic material is an epoxy resin the amount of additive will generally also be in the range 0.01% to 2% by volume of the composition.

The greater is the amount of such additive in the composition the faster will be the cross-linking of the organic material.

By "magnetic material" we mean a material which is magnetic or which is capable of being magnetised. Thus, the magnetic material may not itself be magnetic but it may be magnetized under the influence of an applied magnetic field, for example when the composition is processed.

Whilst there is no particular limit on the maximum size of the particles of magnetic material the particles suitably have a size in the range of 0.5 micron to 200 microns.

Examples of suitable magnetic materials include ferrite materials, eg barium hexa ferrite ($Ba_{0.6}Fe_2O_3$)

and strontium hexa ferrite ($Sr_{0.6}Fe_2O_3$). Other magnetic materials which may be used in the composition of the invention and from which bonded magnets having high magnetic performance may be produced include intermetallitc compounds formed from at least one rare earth metal and at least one transition metal. Rare earth metals from which such a magnetic material may be formed include Sm, Ce, La, Y, Nd, Pr and Gd. and suitable transition metals include Fe, Co, Ni, Zr, Hf, Cu and Ti. The intermetallic compound may, for example, have an empirical formula which may generally, and approximately, be referred to as $RCo_5$ or $R_2Co_{17}$, where R is a least one rare earth metal. An example of the rare earth metal from which the intermetallic magnetic material may be produced is Sm, for example as in the intermetallic compounds which are generally, and approximately, referred to by the empirical formulae Sm $Co_5$ and $Sm_2$ $CO_{17}$. These empirical formulae are not intended to represent exact chemical formulae for the intermetallic rare earth - transition metal compounds as elements other than Sm and Co maybe present in the intermetallic compounds. By way of example, Japanese Patent Publication No 60 227408 refers to a rare earth-transition metal intermetallic compound having the formula Sm $(CO_{0.672}\ Cu_{0.08}\ Fe_{0.22}\ Zr_{0.028})_{5.3}$ and rare earth transition metal compounds having formulae Sm $(Co_{0.672}\ Cu_{0.08}\ Fe_{0.22}\ Zr_{0.028})_{8.35}$ $Sm_{0.75}\ Y_{0.25}\ (Co_{0.65}\ Cu_{0.05}\ Fe_{0.28}\ Zr_{0.02})_{7.8}$, and $Sm_{0.81}\ Ce_{0.19}\ (Co_{0.61}\ Cu_{0.06}\ Fe_{0.31}\ Zr_{0.02})_{7.6}$. Other examples of magnetic materials which are intermetallic compounds of at least one rare earth metal and at least one transition metal include those based as Nd - Fe - B, for example, Nd $(Fe_{0.905}\ B_{0.095})_{5.67}$ which is also described in Japanese Patent Publication No. 60 220905. Other examples of such intermetallic compound magnetic materials include $Sm(Co_{0.67}\ Cu_{0.08}Fe_{0.22}Zr_{0.03})_{7.6}$, $Sm(Co_{0.074}Cu_{0.10}\ Fe_{0.15}Ti_{0.01})_{7.2}$, $Sm(Co_{0.69}Cu_{0.10}Fe_{0.20}Hf_{0.01})_{7.0}$, $Sm_{0.5}Pr_{0.5}CO_5$, $Ce(Co_{0.69}Cu_{0.12}Fe_{0.18}Hf_{0.01})_{6.0}$, $Sm_{0.5}Nd_{0.4}Ce_{0.1}$-$(Co_{0.672}Cu_{0.08}Fe_{0.22}Zr_{0.03})_{8.35}$, and $Nd_{14}Fe_{81}B_5$.

The proportion of particulate magnetic material in the composition is at least 50% by volume of the composition. As the magnetic performance of the bonded magnet increases with increase in the proportion of magnetic material in the composition it is preferred that this proportion should be high, for example. 60% or greater by volume, eg at least 70% by volume and even up to 80% by volume or more.

The components of the composition may be mixed by any convenient means. For example, the components may be mixed in any suitable equipment for blending particulate material. A preferred manner of forming a particularly homogenous composition of the organic material and the particulate magnetic material is to mix the composition under conditions of high shear, for example, on a twin roll mill at an elevated temperature at which the organic material is heat-softened. The mixture may be passed repeatedly throughout the nip between the rolls of the mill, and finally, and if desired, the additive which is capable of effecting or assisting cross-linking may be added to the mixture on the mill. This is a particularly convenient means of mixing the components of the composition when the additive itself is liquid. The mixing of the additive should be effected relatively rapidly so that little if any cross-linking of the organic material is effected during the mixing, and for this reason the additive is preferably added at the end of the mixing process.

In an alternative method the components of the composition may be mixed in the presence of a liquid diluent which is subsequently removed from the composition. The liquid diluent assists in producing a homogenous mixture of the components of the composition and it may be removed from the composition, for example by evaporation, particularly when the diluent is a low boiling liquid.

Where the organic material in the composition is a monomeric material, and even where it is a polymeric material, mixing of the components of the composition under conditions of high shear, to form a homogenous mixture, and the subsequent melt-processing of the composition, may be assisted by including in the composition a proportion of, and generally a small proportion of, a polymeric material which is soluble in or dispersible in the organic material when the organic material is in a fluid, or liquid, state. The presence of a small proportion of such a polymeric material also assists in the formation of a composition which contains a high proportion of particulate magnetic material which is also melt-processable on plastic processing equipment, and most importantly, it assists in the formation of a composition which satisfies the viscosity criteria of the composition of the invention. The components of the composition of the invention may thus comprise a mixture of

(1) a cross-linkable organic material,

(2) a particulate magnetic material, and

(3) a polymeric material which is soluble in or dispersible in the organic material when the organic material is in a liquid state, and optionally

(4) an additive which is capable of effecting or assisting cross-linking of the organic material to produce a cross-linked material.

The polymeric material will generally be a co-polymer containing some functional groups which have an

affinity for the magnetic particles. The polymeric material may promote the wetting of the particles by the organic material. Suitable polymeric materials include polyvinyl butyral/polyvinyl alcohol co-polymer, polyvinyl chloride/polyvinyl acetate/polyvinyl alcohol co-polymer, polyvinyl acetate/polycrotonic acid co-polymer, and polyvinylidene chloride/polyacrylonitrile co-polymer. The composition suitably contains from 0.5 to 15% by volume of such polymeric material. The composition may contain more than one such polymeric material.

The composition of the invention may be shaped on suitable plastics processing equipment, for example in an extruder, in an injection moulder, or by compression moulding.

In effecting the shaping of the composition in an extruder the composition is charged to the extruder, the composition is heated, if necessary in order to convert the organic material to a fluid state, the composition is extruded though a suitable die, the composition is cooled near the exit from the die, for example in order to solidify the organic material in the composition, and a shaped composition is removed from the die. Where it is desired to produce an anisotropic magnet the composition in the die of the extruder is subjected to the influence of a magnetic field whilst the organic material is in a fluid state and the particles of magnetic material are aligned to the direction of easy magnetisation. The magnetic field may be an electromagnet positioned adjacent to the die of the extruder. The cross-linking of the organic material in the composition may be effected whilst the composition is in the die of the extruder, in which case, and where an anisotropic magnet is to be produced, the magnetic field must be maintained until the cross-linking reaction has proceeded at least to the extent that the magnetic field is no longer needed in order to maintain the alignment of the particles of magnetic material.

Alternatively, and where the organic material is solid at ambient temperature, the organic material in the shaped composition may be solidified by cooling the composition in the die of the extruder, and the thus shaped composition may be removed from the extruder. The organic material in the solidified composition may be cross-linked in the solid state, for example by irradiating the composition with ionising radiation, for example with an electron beam or $\gamma$-rays, for example $Co^{60}$ $\gamma$-rays, or the organic material may be cross-linked by heating to elevated temperature in which case the shape of the composition must be maintained in a suitable mould. Where an anisotropic magnet is to be produced the influence of the magnetic field must be maintained until the organic material in the composition has been solidified by cooling of the composition in the die of the extruder. When the organic material has been solidified the influence of the magnetic field is no longer required in order to maintain the alignment of the dipoles of the particles of magnetic material. The organic material may be cross-linked in the solid state. If the organic material is cross-linked by heating at elevated temperature the particles of magnetic material should either first be demagnetised, eg by subjecting the composition to a series of decreasing alternating magnetic fields so that alignment is not lost by repulsion between adjacent particles when the organic material reaches a fluid state during the cross-linking, or the alignment must be maintained by application of a suitable magnetic field during the cross-linking.

The shaping of the composition, and the optional alignment of the particles of magnetic material, may similarly be effected in an injection moulder having a suitable shaped mould into which the composition is injected when the organic material in the composition is in a fluid state. If desired a magnetic field may be positioned adjacent to the mould in order to align the particles of magnetic material to the direction of easy magnetisation. In the injection moulding process the cross-linking and optional demagnetisation of the particles of magnetic material may be effected substantially as described with reference to the extrusion process.

The composition may also be shaped by compression moulding by charging the composition to a suitably shaped mould, heating the composition in the mould to convert the organic material to a fluid state and compressing the composition in the mould, and finally cooling the composition in the mould. In this case also a suitable magnetic field may be positioned adjacent to the mould in order to align the particles of magnetic material, and the cross-linking and optional demagnetisation of the particles of magnetic material may be effected substantially as described with reference to the extrusion process.

The invention is illustrated by the following examples.

In each of the examples a homogeneous composition was produced by compounding the components of each composition on a twin-roll mill heated to a desired temperature. In the initial stages of the moulding the nip between the rolls of the mill was set at about 0.5mm and as composition was add to the mill the nip was increased to about 1 mm. In order to aid mixing of the components of the composition, and as an aid to production of a homogeneous composition, the band of the composition which was formed on a roll of the mill was continuously removed from the mill, turned through 90°, and returned to the mill.

The viscosity of the compositions was measured in a capillary rheometer at a temperature at which the

organic material in the composition was liquid. The capillary rheometer comprised a piston in a cylindrical barrel and a die having a capillary orifice through which the composition was extruded. The shear stress in kN $cm^{-2}$ is defined by

$$\frac{F\ d}{\Pi\ L\ \ D^2}$$

and the shear rate in $second^{-1}$ by

$$\frac{2\ v\ D^2}{15\ d^3},$$

and the viscosity in poise by

$$\frac{\text{shear stress}}{\text{shear rate}} \times 10^8$$

where D is the diameter of the barrel of the rheometer in cm, v is the rate of travel of the piston in the barrel of the rheometer in cm $min^{-1}$, d is the diameter of the capillary of the rheometer in cm, L is the length of the capillary of the rheometer in cm, and F is the force in kN applied to the piston of the rheometer. In the capillary rheometer d = 0.1 cm, L = 1.3 cm, D = 1.3 cm and V equals approximately 5.0 cm/min such that the shear rate was 1100 $sec^{-1}$. The capillary rheometer was operated in a 1122 Instron Universal Testing Machine with the movement of the cross head of the machine causing movement of the ram of the capillary rheometer.

Each composition was moulded by charging a weighed quantity of the homogeneous composition to a cube-shaped mould, the mould was closed so as to compress the composition in the mould, and the mould was placed between the poles of an electromagnet. The mould was heated in hot air to a temperature at which the organic material in the composition was liquid and at which cross-linking was effected and the composition was subjected to a 23.5 kG magnetic field. The mould was then cooled in a stream of air whilst maintaining the magnetic field, the magnetic field was switched off, and the resultant bonded magnet was removed from the mould.

## EXAMPLE 1

| Composition | parts by volume |
|---|---|
| Particulate Magnetic material* | 60.00 |
| Silica (fine) | 0.50 |
| Epoxy resin** | 20.71 |
| Hardener*** | 10.63 |
| Copolymer containing units of vinyl butyral and vinyl alcohol - Pioloform BN18 Wacker Chemie GmbH | 6.36 |
| Calcium stearate | 0.90 |
| Bleached Montan Wax | 0.90 |

* Sm $(Co_{0.672}\ Fe_{0.22}\ Cu_{0.08}\ Zr_{0.028})_{8.35}$
** Epoxidised oligomerised bisphenol A
***Phenol formaldehyde novolak

The temperature of the twin-roll mill during compounding was 90 °C and the maximum temperature of moulding in the presence of the magnetic field was 190 °C.

## EXAMPLE 2

| Composition | parts by volume |
|---|---|
| Particulate magnetic material (as used in Example 1) | 60.00 |
| Fine silica | 0.50 |
| Tetrahydrofurfuryl methacrylate | 19.36 |
| Oligourethane methacrylate* | 14.00 |
| Copolymer containing units of vinyl butyral and vinyl alcohol - Pioloform BS 18 Wacker Chemie GmbH | 6.14 |
| Azobisisobutyronitrile | trace |

* A reaction product of hydroxy ethyl methacrylate and an isocyanate oligomer.

The temperature of the twin-roll mill during compounding was 30 °C and the maximum temperature of moulding in the presence of the magnetic field was 120 °C.

COMPARATIVE EXAMPLE 1

| Composition | parts by volume |
|---|---|
| Particulate magnetic material (as used in Example 1) | 60.00 |
| Fine silica | 0.50 |
| Methacrylic resin* | 33.36 |
| Copolymer containing units of vinyl butyral and vinyl alcohol - Pioloform BS 18 Wacker Chemie GmbH | 6.14 |
| Azo initiator | trace |

*

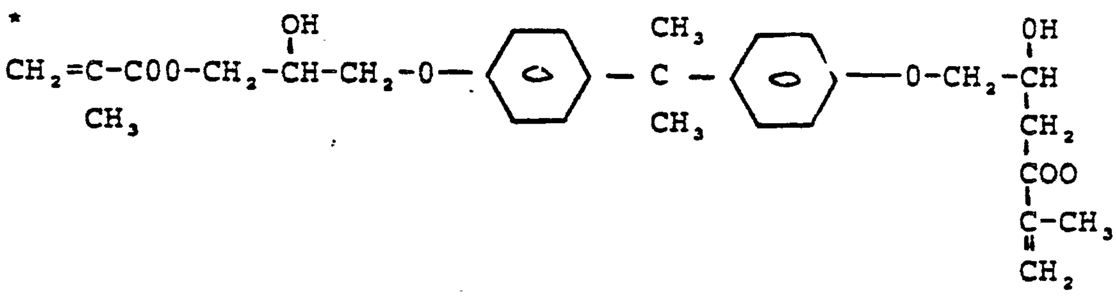

The temperature of the twin-roll mill during compounding was 80 °C and the temperature of moulding in the presence of the magnetic field was 170 °C.

COMPARATIVE EXAMPLE 2

| Composition | parts by volume |
|---|---|
| Particulate magnetic material (as used in Example 1) | 60.00 |
| Fine silica | 0.50 |
| Copolymer containing units of vinyl butyral and vinyl alcohol - Pioloform BS 18 Wacker Chemie GmbH | 6.14 |
| 9 vinyl carbazole | 20.02 |
| Adduct of 4,4' diphenyl methane diisocynate and hydroxyethyl methacrylate* | 13.34 |
| Azo initiator | trace |

*

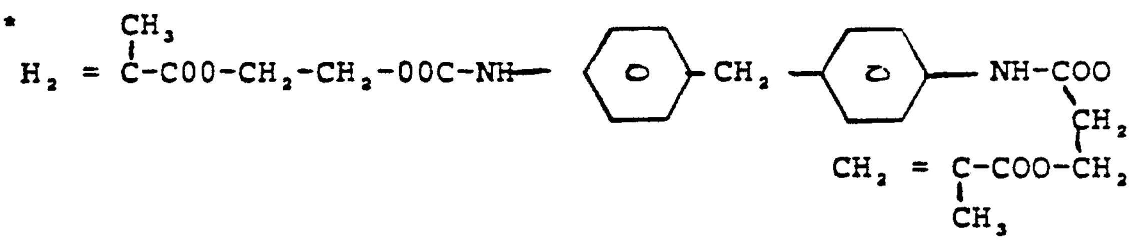

The temperature of the twin-roll mill during compounding was 60° C and the maximum temperature of moulding in the presence of the magnetic field was 150° C.

The viscosities of the compositions of the examples, and the energy products of the bonded magnets produced from the compositions are shown in the accompanying Table 1.

TABLE 1

| Example | Viscosity in poise at 1100 $sec^{-1}$ shear rate | Temperature of Composition in Capillary rheometer ° C | Energy Product of Magnet MG Oe |
|---|---|---|---|
| 1 | 1450 | 160 | 9.7 |
| 2 | 770 | 100 | 8.8 |
| Comparative 1 | not extrudable | | 4.0 |
| Comparative 2 | not extrudable | | 4.0 |

EXAMPLES 3 TO 6 AND COMPARATIVE EXAMPLES 3 AND 14

The above described procedure was repeated in the the six separate examples. In each case a composition as described in Table 2 was compounded on a twin-roll mill at a temperature of 40° C, the composition was charged to a cube-shaped mould, subjected to a 23.5 kG magnetic field, and the composition was heated in the mould up to a temperature of 120° C over a period of 10 minutes, heated at 120° C for 10 mins, and cooled to ambient temperature over a period of 10 minutes in order to cross-link the the organic material in the composition. The viscosity of a sample of each of the compositions was measured in the capillary rheometer at a shear rate of 1100 $sec^{-1}$ following the above described procedure at a temperature of 80° C, in each case the azobisisobutyronitrile being omitted from the sample of the composition in order that cross-linking of the composition should be avoided during the viscosity measurement.

In Table 3 there is shown for each of the bonded magnets removed from the cube-shaped moulds the proportion by volume of particulate magnetic material in the magnet, the viscosity in poise of the composition from which the bonded magnet was produced, and the energy product, (BH)max, of each of the bonded magnets in MG Oe.

TABLE 2

| Composition | Ex 3 | Ex 4 | Ex 5 | Ex 6 | Comparative Ex 3 | Comparative Ex 4 |
|---|---|---|---|---|---|---|
| Particulate magnetic material (as used in Example 1). | 20.00 | 22.00 | 24.00 | 26.00 | 27.20 | 28.80 |
| Tetrahydrofurfuryl methacrylate | 10.00 | 9.10 | 8.10 | 7.09 | 5.67 | 5.67 |
| Oligourethane methacrylate (as used in Example 1) | 6.62 | 6.10 | 5.40 | 4.73 | 3.78 | 3.78 |
| Copolymer containing units of vinyl butyral and vinyl alcohol (as used in Example 1). | 3.13 | 2.82 | 2.50 | 2.19 | 1.75 | 1.75 |
| Methacrylate funtional silane | 0.17 | 0.16 | 0.14 | 0.13 | 0.10 | 0.11 |
| Particulate $TiO_2$ (R-CR2) | - | - | - | - | 1.60 | - |
| Azobisisobutyronitrile | 0.34 | 0.30 | 0.27 | 0.24 | 0.19 | 0.19 |
| In Table 2 the amounts of the components of each of the compositions are expressed in parts by volume. | | | | | | |

TABLE 3

| | Proportion by volume of magnetic material | Viscosity poise | (BH)max MG Oe |
|---|---|---|---|
| Ex 3 | 50.0 | 490 | 6.9 |
| Ex 4 | 54.3 | 630 | 7.4 |
| Ex 5 | 59.4 | 880 | 7.1 |
| Ex 6 | 64.4 | 2400 | 4.9 |
| Comparative Ex 3 | 67.5* | >7000 | 4.4 |
| Comparative Ex 4 | 71.5 | >7000 | 3.9 |

* Proportion by volume of total particulate material.

It can be seen from the results in Table 3 that where the composition from which the bonded magnet is produced has a high viscosity above the upper limit specified in the present invention it is only possible to produce a bonded magnet which has a low magnetic energy product.

## Claims

1. A composition from which a bonded magnet may be produced and which comprises a mixture of a cross-linkable organic material and a particulate magnetic material, the composition comprising at least 50% by volume of particulate magnetic material, the components of the composition being chosen such that the composition is extrudable through a capillary rheometer, and the composition having a viscosity of not more than 6000 poise at a shear rate of 1100 $sec^{-1}$ when the organic material is in a liquid state and the composition is extruded through said capillary rheometer.

2. A composition as claimed in claim 1 in which the viscosity of the composition is not greater than 3000 poise at a shear rate of 1100 $sec^{-1}$ when the organic material is in a liquid state and the composition is extruded through said capillary rheometer.

3. A composition as claimed in claim 2 in which the viscosity of the composition is not greater than 1000 poise.

4. A composition as claimed in any one of claims I to 3 in which the organic material is solid at 25° C.

5. A composition as claimed in claim 4 which has the required viscosity at a temperature which is not more than 50° C above the melting point of the organic material in the composition.

6. A composition as claimed in any one of claims 1 to 5 which the organic material comprises an organic monomeric material.

7. A composition as claimed in any one of claims 1 to 5 in which the organic material comprises an organic polymeric material.

8. A composition as claimed in any one of claims 1 to 7 which comprises from 20% to 40% by volume of organic material.

9. A composition as claimed in any one of claims 1 to 8 which comprises at least 60% by volume of particulate magnetic material.

10. A composition as claimed in any one of claims 1 to 9 which comprises an additive capable of effecting or assisting cross-linking of the organic material.

11. A composition as claimed in claim 10 which comprises 0.01 to 2% by volume of said additive.

12. A composition as claimed in any one of claims 1 to 11 in which the particles of magnetic material have a size in the range 0.5 micron to 200 microns.

13. A composition as claimed in any one of claims 1 to 12 in which the particulate magnetic material comprises an intermetallic compound of a rare earth metal and a transition metal.

14. A composition as claimed in claim 13 in which the transition metal is or comprises Co.

15. A composition as claimed in claim 13 or claim 14 in which the particulate magnetic material has an approximate empirical formula $RCo_5$ or $R_2Co_{17}$, where R is at least one rare earth metal.

16. A composition as claimed in any one of claims 13 to 15 in which the rare earth metal is or comprises Sm.

17. A composition as claimed in claim 13 in which the particulate magnetic material comprises an intermetallic Nd-Fe-B compound.

18. A composition as claimed in any one of claims 1 to 17 in which the components of the composition are mixed under conditions of high shear.

19. A composition as claimed in any one of claims I to 18 which comprises a polymeric material which is soluble in or dispersible in the organic material when the organic material is in a liquid state.

20. A composition as claimed in claim 18 which comprises from 0.5% to 15% by volume of polymeric material.

21. A bonded magnet comprising a cross-linked organic material and a particulate magnetic material produced from a composition as claimed in any one of claims 1 to 20.

22. A bonded magnet as claimed in claim 21 which has a magnetic energy product (BH)max of greater than 7.0 MG Oe

Fig.1